# EUROPÄISCHE PATENTSCHRIFT

(11) **EP 1 396 673 B1**
(45) Veröffentlichungstag und Bekanntmachung des Hinweises auf die Patenterteilung: **19.01.2005**
(21) Anmeldenummer: 02020138.0
(22) Anmeldetag: 09.09.2002
(51) Int. Cl.: F16L 55/045

(54) **Druckschlag- und Geräusch-Dämpfer, insbesondere für Anschlüsse von Sanitärarmaturen**
Water hammer attenuator for water pipes, especially for sanitary appliances
Réducteur de coups de bélier pour conduites d'eau, en particulier pour installations sanitaires

(43) Veröffentlichungstag der Anmeldung: 10.03.2004
(73) Patentinhaber: Frey, Conrad, 8008 Zürich (CH)
(72) Erfinder:
(74) Vertreter: Wolff, Michael, Dipl.-Phys.

(56) Entgegenhaltungen:
- WO-A-02/42677
- DE-A- 19 652 111
- DE-A- 19 825 543
- US-A- 4 732 175

## Beschreibung

Die Erfindung betrifft einen Dämpfer gemäß Oberbegriff des Anspruches 1.
Bei einem aus der EP 1.002.984 A2 (Fig. 1) bekannten gattungsgemäßen Dämpfer für Wasserarmaturen ist dessen einteiliges Gehäuse als Rohr-Nippel mit erweitertem Innendurchmesser und radialen Stirnflächen zur Begrenzung des Einbauraumes für das Dämpfungselement ausgebildet und Träger einer Wandrosette. Zum Einbau des Dämpfungselementes wird dieses durch den erweiterten Nippelstutzen mit Außengewinde für die Anschlussbefestigung mittels Überwurfmutter am Armaturkörper (siehe DIN EN 200, Seite 9, Bild 8 rechts - Juli 1990) in den Einbauraum eingeführt, worauf dieser Nippelstutzen durch Einsatz einer Buchse auf die Innenweite des anderen Nippelstutzens verengt wird. Erst dann kann das Schlauchstück eingezogen und mittels Flanschhülsen festgeklemmt werden.
Nachteilig ist dabei, dass der Einbau des Dämpfungselementes und dessen Lagesicherung umständlich und nicht bei allen Abmessungsverhältnissen möglich sind.
Der Erfindung liegt daher die Aufgabe zugrunde, einen gattungsgemäßen Dämpfer für den Anschluss einer Sanitärarmatur zu schaffen, welcher einen einfachen und leicht zu sichernden Einbau des Dämpfungselementes gestattet.

Diese Aufgabe ist durch die kennzeichnenden Merkmale des Anspruches 1 gelöst: durch die Teilbarkeit des Gehäuses kann dessen eine Seite axial so weit geöffnet werden, dass das Dämpfungselement in der biegesteifen Kapsel ohne elastische Verformung axial eingeführt werden kann, nachdem es in die vorübergehend geöffnete Kapsel gelegt wurde. Deren Einfügung in das Gehäuse stellt zwischen beiden einen Formschluss her, der es erlaubt, die äußere Form des Gehäuses des Armaturanschlusses unabhängig von der jeweils erforderlichen Form des Dämpfungselementes zu gestalten.

Vorteilhafte Ausgestaltungen und Weiterbildungen des erfindungsgemäßen Dämpfers sind in den Ansprüchen 2 bis 10 charakterisiert: Besonders vorteilhaft ist die Ausbildung (gemäß Anspruch 4) des Dämpfungselementes, des Stützrohres und des Schlauchstückes als einstückige Patrone, da deren Form bei entsprechender Innengestaltung des Gehäuses des Zwischen- oder Anschlussstückes trotz wechselnder Gehäuseform gleich bleiben kann, also eine feste Größe in der Produktion darstellt.

Es ist zwar aus der WO 02/42677 A1 (Fig. 3) ein Druckschlag-Dämpfer für Zwischenstücke in Wasserleitungen bekannt gewesen, welcher ein bewässertes elastisches Schlauchstück, das radial von einem teilbaren starren Gehäuse des Zwischenstückes umgeben und wasserdicht an dem Gehäuse festgelegt ist, und ein radial zwischen Gehäuse und Schlauchstück wasserdicht eingebautes, afluides Dämpfungselement aufweist; bei diesem Dämpfer fehlt aber die von einem zentralen Klemmrohr übernommene Wasserführung durch das Schlauchstück, das dort mit dem Klemmrohr einen koaxialen ringförmigen Zwischenraum bildet, der durch Löcher mit dem Wasserkanal verbunden ist. Insbesondere aber fehlt eine das Dämpfungselement einschließende, formbeständige zweiteilige Kapsel, die formschlüssig in das Gehäuse eingefügt ist. Statt in einer Kapsel liegt das Dämpfungselement dort radial außen unmittelbar an einem von zwei komplementären Gehäuseteilen an.

Im Folgenden ist die Erfindung anhand zweier durch die beigefügte Zeichnung beispielhaft dargestellter bevorzugter Ausführungsformen des erfindungsgemäßen Dämpfers in Verbindung mit dem Anschluss von Sanitärarmaturen im Einzelnen erläutert.
Es zeigt:
- Fig. 1: einen zentralen Längsschnitt durch die erste Ausführungsform eines Anschlussstückes mit Dämpferpatrone, zur Hälfte
- Fig. 2: einen teilweise wiedergegebenen entsprechenden Schnitt durch eine Variante des Anschlussstückes (mit Überwurfmutter)
- Fig. 3: einen zentralen Längsschnitt durch die zweite Ausführungsform eines Anschlussstückes für Einlocharmaturen, mit Dämpferpatrone
und
- Fig. 4: einen Querschnitt nach der Linie IV - IV in Fig. 3 durch die Patrone der zweiten Ausführungsform

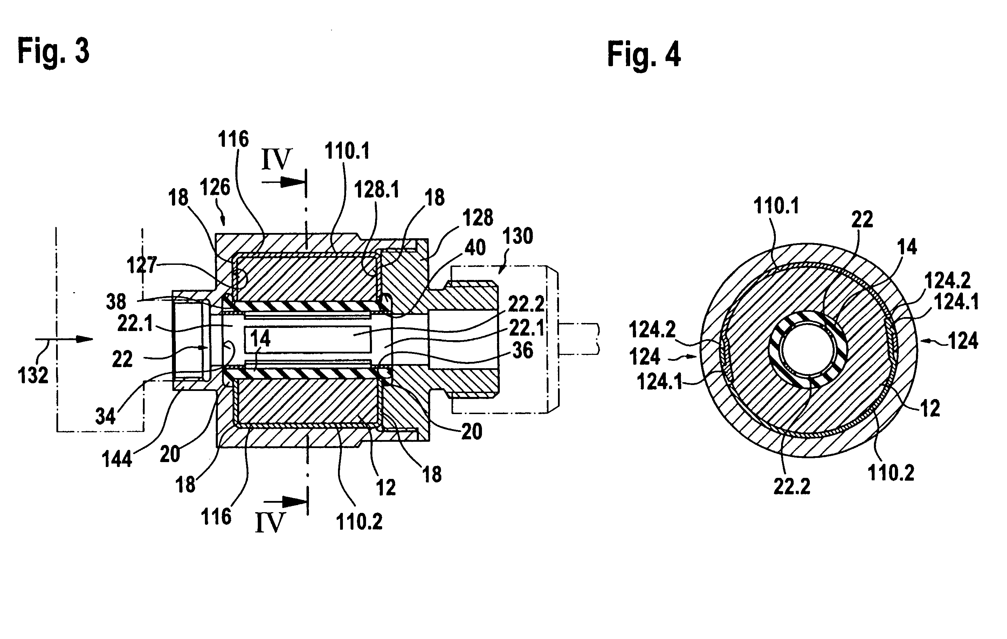

Die zwei Dämpferpatronen beider Ausführungsformen unterscheiden sich in der gegenseitigen Verbindung ihrer je zwei gleichen Hälften 10.1 und 10.2 bzw. 110.1 und 110.2 einer formbeständigen Kapsel 10 bzw. 110 zur Aufnahme eines afluiden Dämpfungselementes 12, das aus einem Elastomer mit geschlossenen Poren besteht und mit seiner kreiszylindrischen Rohrform den Hohlraum vollständig füllt, der einerseits von der Kapsel und andererseits von einem elastischen Schlauchstück 14 gebildet wird, welches im Betrieb Wasser führt und vom Wasserschall beaufschlagt wird. - Jede Kapsel 10 oder 110 besteht aus einem in ihrer Mitte geteilten kreiszylindrischen Mantel 16 bzw. 116 und aus zwei in radialen Ebenen angeordneten, parallelen, ein- bzw. zweiteiligen Kreisringscheiben 18, deren Bohrungsberandungen den Außenumfang des Schlauchstückes 14 umfassen, wobei sie zwei an dessen Enden vorhandene flanschartige Dichtwülste 20 axial innen tangieren, die von den zwei ringförmig geschlossenen Endabschnitten 22.1 eines kreiszylindrischen biegesteifen Stützrohres 22 mit achsparallelen langrechteckigen Schlitzen 22.2 radial nach außen beaufschlagt werden. Durch diese Schlitze 22.2 gelangt das unter Druck stehende Leitungswasser an den Innenumfang des Schlauchstückes 14, das mit dem Dämpfungselement 12 zusammenwirkt wie eine Hintereinanderschaltung zweier Federn, deren Kennlinien zweckmäßig aufeinander abgestimmt sind. - Während im ersten Ausführungsbeispiel die beiden topfförmigen Hälften 10.1 und 10.2 der quer zur Achse geteilten Kapsel 10 ohne Weiteres bündig und stumpf axial zusammenstoßen, da sie zumindest durch Reibschluss zum einstückigen Dämpfungselement 12 auf diesem haften, sind im zweiten Ausführungsbeispiel die beiden schalenförmigen Hälften 110.1 und 110.2 der längs der Achse geteilten Kapsel 110 mittels gleicher Schnappverbindungen 124 miteinander verbunden, die je aus Haken 124.1 und Öse 124.2 bestehen, wie Fig. 4 veranschaulicht; diese können sich paarweise in der radialen Mittelebene der Kapsel 110 oder an deren beiden Enden befinden oder sich über die ganze Kapsellänge erstrecken. Zusammenfassend ist festzustellen, dass jede der beiden Dämpferpatronen eine einstückige bauliche Einheit der Kapsel 10 bzw. 110 mit dem Dämpfungselement 12, dem Schlauchstück 14 mit Dichtwülsten 20 und dem Stützrohr 22 mit Schlitzen 22.2 ist. Diese Einheit wird als Ganzes gehandhabt und in ein sie umschließendes Gehäuse 26 bzw. 126 des Armaturanschlusses eingesetzt, bevor es mittels eines Gewinderinges 28 bzw. 128 mit axial nach außen versetztem Außengewinde 30 bzw. 130 für eine in Fig. 3 angedeutete Überwurfmutter am Armaturkörper bis auf den zentralen Wasserkanal 32 bzw. 132 längs der Achse seitlich wasserdicht verschlossen wird. - Wesentlich ist, dass sowohl das Gehäuse 26 bzw. 126 einerseits (auf der dem Gewindering fernliegenden Seite der Patrone) als auch der Gewindering 28 bzw. 128 andererseits je eine von zwei spiegelbildlichen radialen Innenschultern 34 und 36 sowie je eine von zwei gleichen umlaufenden Innenflächen 38 und 40 besitzt, an denen jeweils einer der beiden Dichtwülste 20 anliegt; im Falle der Innenflächen unter Anpressung durch das Stützrohr 22, sodass dort Wasserdichtheit besteht.

Da das Gehäuse 26 bzw. 126 ein rechteckiges Hohlraum-Profil aufweist, an dem auch der Gewindering 28 bzw. 128 beteiligt ist, und die Patrone genau hineinpasst, liegt nicht nur die äußere Umfangsfläche des Dämpfungselementes 12 an der inneren Umfangsfläche der Kapsel 10 bzw. 110 an, sondern auch deren äußere Umfangsfläche an der inneren Umfangsfläche des Gehäuses; außerdem liegt eine der beiden Kapselscheiben 18 an einer radialen Innenfläche 27 bzw. 127 des Gehäuses an, während die andere Scheibe 18 an der radialen Innenfläche 28.1 bzw. 128.1 des eingeschraubten Gewinderinges 28 bzw. 128 anliegt. Der von dem Gehäuse 26 bzw. 126 und dem Gewindering 28 bzw. 128 gebildete Hohlraum radial außerhalb des Wasserkanals 32 bzw. 132 ist daher vollständig durch die Patrone ausgefüllt.

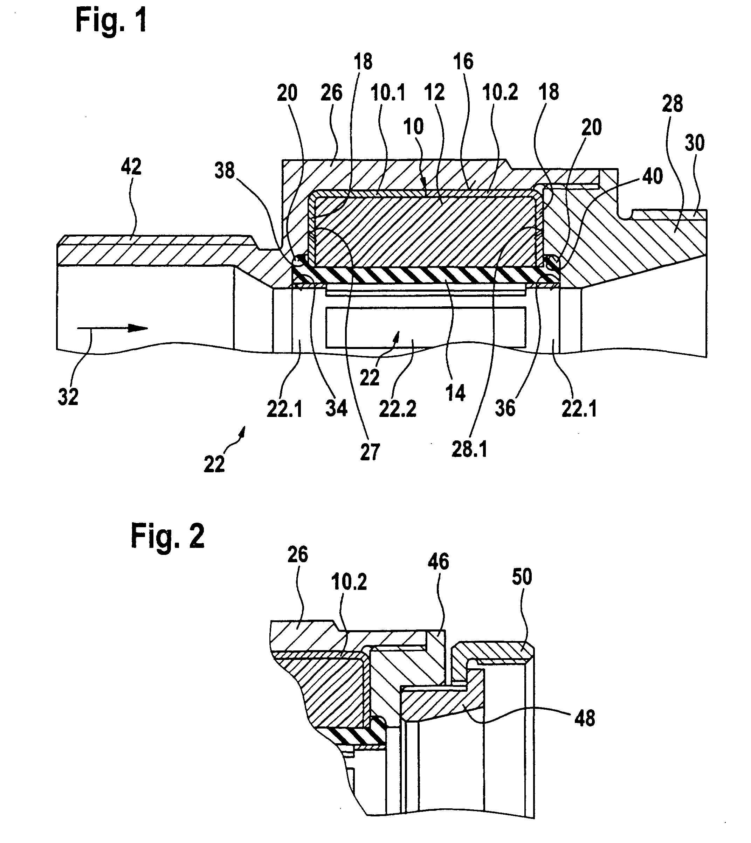

Die erste Ausführungsform des Dämpfers ist in ein Anschlussstück integriert, welches nach Fig. 1 das Gehäuse 26 und rechts davon den Gewindering 28 mit abgesetztem Außengewinde 30 zum Aufschrauben einer armaturseitigen Überwurfmutter sowie links vom Gehäuse 26 einen Stutzen 42 mit Außengewinde zum Einschrauben in ein wandseitiges Leitungsrohrende mit Innengewinde umfasst.
Die zweite Ausführungsform des Dämpfers ist in ein ähnliches Anschlussstück integriert, welches nach Fig. 3 das ähnliche Gehäuse 126 und oberhalb davon den funktionsgleichen, ähnlichen Gewindering 128 mit abgesetztem Außengewinde 130 sowie unterhalb vom Gehäuse 126 einen Stutzen 144 mit Innengewinde umfasst. In Fig. 3 ist durch strichpunktierte Linien auch angedeutet, dass in diesem Ausführungsbeispiel an den Anschluss einer sogenannten Einlocharmatur an ein wandseitiges Eckventil über das gezeigte Anschlussstück mit eingebautem Dämpfer in Patronenform gedacht ist.

Die erste Ausführungsform des Dämpfers ist auch in Verbindung mit der in Fig. 2 gezeigten Variante des Anschlussstückes von Fig. 1 verwendbar, bei welcher dessen Gewindering 28 mit Außengewinde 30 durch die Kombination eines in das Gehäuse 26 geschraubten Zwischenringes 46 und eines in diesen geschraubten Tragringes 48 ersetzt ist, auf dem eine Überwurfmutter 50 lose sitzt, die mit der Armatur verschraubt wird.

## Patentansprüche

1. Druckschlag- und Geräusch-Dämpfer für Zwischenstücke in Wasserleitungen und für Anschlussstücke zur Befestigung an Sanitärarmaturen, mit einem wasserführenden, elastischen Schlauchstück (14), das radial von einem starren Gehäuse (26; 126) des Zwischen- bzw. Anschlussstückes umgeben und wasserdicht an dem Gehäuse festgelegt ist; und mit einem radial zwischen Gehäuse und Schlauchstück wasserdicht eingebauten, afluiden Dämpfungselement (12), **dadurch gekennzeichnet, dass** in das teilbare Gehäuse (26; 126) eine das Dämpfungselement (12) einschließende, formbeständige zweiteilige Kapsel (10; 110) formschlüssig eingefügt ist.

2. Dämpfer nach Anspruch 1, **dadurch gekennzeichnet, dass** das Schlauchstück (14) an jedem Ende einen flanschartigen Dichtwulst (20) aufweist, der an einer radialen Innenschulter (34 oder 36) des Gehäuses (26; 126) anliegt und radial gegen eine umlaufende Innenfläche (38 oder 40) des Gehäuses gepresst ist, wobei eine radiale Ringscheibe (18) jeder Kapselhälfte (10.1 oder 10.2; 110.1 oder 110.2) mit ihrer Durchbruchsberandung den Dichtwulst (20) auf dessen der Innenschulter (34 oder 36) abgewandten Seite tangiert und das Schlauchstück (14) umfasst.

3. Dämpfer nach Anspruch 2, **dadurch gekennzeichnet, dass** das Schlauchstück (14) bei seinen Dichtwulsten (20) mittels ringförmig geschlossener Endabschnitte (22.1) eines zylindrischen Stützrohres (22) mit vorzugsweise schlitzförmigen Wanddurchbrüchen (22.2) für den Wasserdurchtritt radial nach außen beaufschlagt wird, welches das Schlauchstück (14) außerhalb dieser Wanddurchbrüche (22.2) trägt.

4. Dämpfer nach Anspruch 3, **dadurch gekennzeichnet, dass** das starr gekapselte Dämpfungselement (12), das steife Stützrohr (22) und das dazwischen eingeklemmte Schlauchstück (14) eine einstückige Patrone (10; 110 und 12, 14, 22) bilden, die in das vorübergehend geöffnete Gehäuse (26; 126) eingesetzt ist.

5. Dämpfer nach Anspruch 4, für Zwischen- und Anschlussstücke, deren Gehäuse (26; 126) ein rechtwinkliges Hohlraum-Profil aufweist, **dadurch gekennzeichnet, dass** das Dämpfungselement (12) und die Kapsel (10; 110) je eine von zwei aneinanderliegenden, zylindrischen Umfangsflächen aufweisen, die bezüglich der gemeinsamen Längsachse von Stützrohr (22) und unbelastetem Schlauchstück (14) koaxial sind.

6. Dämpfer nach einem der Ansprüche 1 bis 5, **dadurch gekennzeichnet, dass** die Kapsel (10; 110) aus zwei gleichen komplementären Hälften (10.1, 10.2; 110.1, 110.2) besteht und aus tiefgezogenem Metallblech oder gespritztem Kunststoff gefertigt ist.

7. Dämpfer nach Anspruch 6, **dadurch gekennzeichnet, dass** die Kapsel (10) durch einen virtuellen Querschnitt in einer radialen Ebene in zwei Hälften (10.1, 10.2) geteilt ist, die bündig stumpf zusammenstoßen.

8. Dämpfer nach Anspruch 6, **dadurch gekennzeichnet, dass** die Kapsel (110) durch einen virtuellen Längsschnitt in einer axialen Ebene in zwei Hälften (110.1, 110.2) geteilt ist, die mittels einer oder zweier gleicher Schnappverbindungen (124) in Umfangsrichtung der Kapsel zusammengehalten sind.

9. Dämpfer nach einem der Ansprüche 1 bis 8, wobei das Gehäuse (26; 126) des Anschlussstückes eine zylindrische Innenfläche und eine radiale Stirnfläche (27; 127) für die Anlage der Kapsel (10; 110) aufweist, **dadurch gekennzeichnet, dass** die axial gegenüberliegende radiale Stirnfläche des Gehäuses (26; 126) zur Anlage der Kapsel (10; 110) mittels eines eingeschraubten Gewinderinges (28; 128) gebildet ist, der mit einem axial versetzten Außengewinde (30; 130) für eine Überwurfmutter oder (Fig. 2) mit einem Innengewinde für einen eingeschraubten Flanschring (48) als Träger einer Überwurfmutter (50) versehen ist.

10. Dämpfer nach Anspruch 9 mit 2, **dadurch gekennzeichnet, dass** eine (36) der beiden Innenschultern (34, 36) des Gehäuses (26; 126) und eine (40) seiner beiden umlaufenden Innenflächen (38, 40) an dem Gewindering (28; 128) ausgeformt sind.

## Claims

1. Water-hammer and noise damper for intermediate members in water ducts and for connecting members for fastening to sanitary fittings, with a water-conducting resilient hose member (14) which is radially surrounded by a rigid housing (26; 126) of the intermediate member or connecting member and is water-tightly fixed to the housing and with an afluidic damping element (12) water-tightly incorporated radially between the housing and hose member, **characterised in that** a form-stable, two-part enclosure (10; 110) enclosing the damping element (12) is inserted with positive fit in the separable housing (26; 126).

2. Damper according to claim 1, **characterised in that** the hose member (14) has at each end a flange-like sealing bead (20) which bears against a radially inner shoulder (34 or 36) of the housing (26; 126) and is radially pressed against an encircling inner surface (38 or 40) of the housing, wherein a radial annular disc (18) of each enclosure half (10.1 or 10.2; 110.1 or 110.2) contacts, by its passage rim, the sealing bead (20) on the side thereof remote from the inner shoulder (34 or 36) and surrounds the hose member (14).

3. Damper according to claim 2, **characterised in that** the hose member (14) is loaded radially outwardly at its sealing beads (20) by means of annularly closed end sections (22.1) of a cylindrical support pipe (22) with preferably slot shaped wall passages (22.2) for water penetration, the support pipe carrying the hose member (14) outside these wall passages (22.2).

4. Damper according to claim 3, **characterised in that** the rigidly enclosed damping element (12), the stiff support pipe (22) and the hose member (14) clamped in place therebetween form a unitary cartridge (10; 110 and 12, 14, 22) inserted in the transiently opened housing (26; 126).

5. Damper according to claim 4, for intermediate and collecting members, the housings (26; 126) of which have a right-angular cavity profile, **characterised in that** the damping element (12) and enclosure (10; 110) each have a respective one of two adjacently disposed cylindrical circumferential surfaces which are coaxial with respect to the common longitudinal axis of support pipe (22) and unloaded hose member (14).

6. Damper according to one of claims 1 to 5, **characterised in that** the enclosure (10; 110) consists of two identical complementary halves (10.1, 10.2; 110.1, 110.2) and is made of deep-drawn sheet metal or injection-moulded plastics material.

7. Damper according to claim 6, **characterised in that** the enclosure (10) is divided by a virtual cross-section in a radial plane into two halves (10.1, 10.2) which abut end-to-end in a butt joint.

8. Damper according to claim 6, **characterised in that** the enclosure (110) is divided by a virtual longitudinal section in an axial plane into two halves (110.1, 110.2) which are held together by means of one or two identical snap connections (124) in circumferential direction of the enclosure.

9. Damper according to one of claims 1 to 8, wherein the housing (26; 126) of the connecting member has a cylindrical inner surface and a radial end surface (27; 127) for support of the enclosure (10; 110), **characterised in that** the axially opposite radial end surface of the housing (26; 126) for support of the enclosure (10; 110) is formed by means of a screwed-in threaded ring (28; 128) which is provided with an axially offset external thread (30; 130) for a box nut or (Fig. 2) with an internal thread for a screwed-in flange ring (48) as support for a box nut (50).

10. Damper according to claim 9 with claim 2, **characterised in that** one (36) of the two inner shoulders (34, 36) of the housing (26; 126) and one (40) of its two encircling inner surfaces (38, 40) are formed at the threaded ring (28; 128).

## Revendications

1. Amortisseur de coups de bélier et de bruit pour des tronçons intermédiaires dans des conduites d'eau et pour des tronçons de raccordement destinés à être fixés à des robinetteries sanitaires, comportant un tronçon de tuyau souple (14), élastique et conduisant l'eau, qui est entouré radialement par un boîtier (26 ; 126) rigide du tronçon intermédiaire ou du tronçon de raccordement et est fixé de façon étanche à l'eau sur le boîtier ; et comportant un élément amortisseur (12) sans fluide, monté de façon étanche à l'eau, radialement entre le boîtier et le tronçon de tuyau souple,
**caractérisé en ce qu'**une capsule (10 ; 110) en deux parties, résistante à la déformation et enfermant l'élément amortisseur (12), est insérée par combinaison de forme dans le boîtier (26 ; 126) divisible.

2. Amortisseur selon la revendication 1, **caractérisé en ce que** la tronçon de tuyau (14) présente à chaque extrémité un bourrelet d'étanchéité (20) en forme de collet, qui s'applique à un épaulement intérieur (34 ou 36) radial du boîtier (26 ; 126) et est pressé radialement contre une surface intérieure (38 ou 40) faisant le tour du boîtier; un disque annulaire (18) radial de chaque moitié de capsule (10.1 ou 10.2 ; 110.1 ou 110.2) est, par le bord de son ouverture, tangent au bourrelet d'étanchéité (20) sur son côté éloigné de l'épaulement intérieur (34 ou 36) et il entoure le tronçon de tuyau (14) souple.

3. Amortisseur selon la revendication 2, **caractérisé en ce que**, à l'endroit de ses bourrelets d'étanchéité (20), le tronçon de tuyau (14) souple est alimenté à l'aide de segments terminaux (22.1) - fermés en anneau - d'un tube de support (22) cylindrique, comportant des traversées de paroi (22.2) de préférence en fente pour assurer le passage de l'eau radialement vers l'extérieur, qui supporte le tronçon de tuyau (14) souple à l'extérieur de ces traversées de paroi (22.2).

4. Amortisseur selon la revendication 3, **caractérisé en ce que** l'élément amortisseur (12) encapsulé rigidement, le tube de support (20) rigide et du tronçon de tuyau (14) souple serré entre ceux-ci forment une cartouche (10 ; 110 et 12, 14, 22) en un seul tronçon, qui est insérée dans le boîtier (26 ; 126) temporairement ouvert.

5. Amortisseur selon la revendication 4 destiné à des tronçons intermédiaires et à des tronçons de raccordement, dont le boîtier (26 ; 126) présente un espace creux au profil rectangulaire, **caractérisé en ce que** l'élément amortisseur (12) et la capsule (10 ; 110) présentent chacun une de deux surfaces périphériques cylindriques et contiguës qui sont coaxiales par rapport à l'axe longitudinal commun du tube de support (22) et du tronçon de tuyau (14) souple non chargée.

6. Amortisseur selon l'une des revendications 1 à 5, **caractérisé en ce que** la capsule (10 ; 110) se compose de deux moitiés complémentaires identiques (10.1, 10.2 ; 110.1, 110.2) et elle est fabriquée en tôle métallique à emboutissage profond ou en matière plastique moulée par injection.

7. Amortisseur selon la revendication 6, **caractérisé en ce que** la capsule (10) est divisée, par une coupe transversale virtuelle dans un plan radial, en deux moitiés (10.1, 10.2) qui s'aboutent bord à bord par affleurement.

8. Amortisseur selon la revendication 6, **caractérisé en ce que** la capsule (110) est divisée, par une coupe longitudinale virtuelle dans un plan axial, en deux moitiés (110.1, 110.2) qui sont maintenues en direction périphérique de la capsule par un ou deux assemblages identiques par encliquetage (124).

9. Amortisseur selon l'une des revendications 1 à 8, dans lequel le boîtier (26 ; 126) du tronçon de raccordement présente une surface intérieure cylindrique et une surface frontale (27 ; 127) radiale pour appliquer la capsule (10 ; 110), **caractérisé en ce que** la surface frontale radiale axialement opposée du boîtier (26 ; 126) est formée pour appliquer la capsule (10 ; 110) à l'aide d'une bague filetée (28 ; 128) vissée qui est munie d'un filetage extérieur (30 ; 130) axialement décalé et destiné à un écrou d'accouplement ou (figure 2) qui est munie d'un taraudage destiné à un collet rapporté (48) vissé qui sert de support à un écrou d'accouplement (50).

10. Amortisseur selon la revendication 9 ainsi que 2, **caractérisé en ce qu'**un (36) des deux épaulements intérieurs (34, 36) du boîtier (26 ; 126) et une (40) de ses deux surfaces intérieures (38, 40) faisant le tour sont façonnés sur la bague filetée (28 ; 128).
